(19) Europäisches Patentamt
European Patent Office
Office européen des brevets

(11) **EP 2 450 546 A1**

(12) **EUROPEAN PATENT APPLICATION**

(43) Date of publication:
**09.05.2012 Bulletin 2012/19**

(51) Int Cl.:
***F01N 13/18*** *(2010.01)*     ***F16L 27/11*** *(2006.01)*

(21) Application number: **11188508.3**

(22) Date of filing: **09.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.11.2010 US 942684**
**13.07.2011 US 507508 P**
**09.11.2010 US 942828**

(71) Applicant: **Tru-Flex Metal Hose, LLC**
**West Lebanon, IN 47791 (US)**

(72) Inventors:
• **Thomas, Clark**
**West Lebanon, IN Indiana 47991 (US)**
• **Swank, Scott, Robert**
**Williamsport, IN Indiana 47993 (US)**

(74) Representative: **Rutherford, Claire**
**Murgitroyd & Company**
**Scotland House**
**165-169 Scotland Street**
**Glasgow G5 8PL (GB)**

(54) **Frequency-controlled exhaust bellows assembly**

(57)    An exhaust connection coupler is provided having a flexible conduit portion, a cover made of a generally porous and flexible knitted metallic wire mesh material surrounding the conduit portion and a retainer for combining end parts of the conduit portion and cover. The cover may be constructed of a series of stockinette stitches formed in a continuous round-and-round manner in a seamless tubular configuration. The cover can be selected from a group of covers designed to be applied to the coupler, the particular cover being chosen for its weight or stiffness so as to selectively control the natural frequency of the coupler. Additionally, the loosely knitted configuration of the cover is designed to provide resistance limiting longitudinal growth of the coupler while enabling compression and angular flexibility. Further, the coupler may include one or more spacers for providing separation between the cover and the conduit portion.

FIG. 1

**Description**

BACKGROUND OF THE INVENTION

As is generally known, some automotive exhaust systems employ a flexible connection member or coupler disposed between two exhaust pipes in order to absorb undesirable vibrations input into the exhaust piping, absorb any thermal expansion of contraction of the exhaust piping and compensate misalignments, such as axial or torsional misalignments, in the exhaust piping. The couplers are often formed of a flexible bellows member and a braid cover surrounding an outer periphery of the bellows member. The braid cover is typically formed of a plurality of ribbon-like bundles made up of parallel metallic wire filaments. The bundles are fashioned from a plurality of metal wire filaments that are generally in side-by-side contact with one another to form a substantially solid ribbon. The bundles are braided together to form the braid cover. Exemplary of such a coupler is U.S. Patent No. 5,769,463 to Thomas. The couplers may also include an interlock hose member disposed within the bellows member. Exemplary of such a coupler is U.S. Patent No. 6,230,748 to Krawietz, et al.

Vibrations from one or more components connected to the exhaust system, for example, engine vibrations and vibrations induced through movement of the vehicle, can cause stress on, and premature failure of, the components within the exhaust system. In such cases, the components within the exhaust system, including the flexible connection members, can be fatigued to the point of cracking thereby rendering the components ineffective. Thus, it is desirable to dampen such vibrations and/or ensure that the components within the exhaust system, including the coupler, do not have natural frequencies that are in the range of frequencies produced by the vibrations.

Torsional forces caused by differential rotation of the exhaust system components with respect to one another can inflict significant damage on such components. Such dynamic torsional forces, which can be generated within the vehicle or through the flexing of its frame as it maneuvers uneven terrain, can lead to premature metal fatigue, cracking and other failure of the exhaust system components. One solution to this problem has been to provide a coupler comprising a bellows member that allows torsional rotation. Exemplary of such a bellows member is U.S. Patent No. 7,066,495 to Thomas, et al. However, when the currently-known braid covers, as described above, are combined with such a bellows member, the stiffness of the braid covers provide a resistance that reduces or eliminates the bellows member's torsional flexibility.

In recent years the Environmental Protection Agency (EPA) has required that emission levels of motor vehicles be reduced over time. The EPA implements these requirements by setting regulations which require emission reductions by any company that manufactures motor vehicles, engines or emission systems. The main goal in reducing emissions is to eliminate as much mono-nitrogen oxide ($NO_x$) in the exhaust stream as possible. This requires that most manufacturers of motor vehicles and other equipment, such as construction and agricultural equipment, include emission systems on their vehicles and equipment. The biggest factor in achieving a reduction of mono-nitrogen oxides is the temperature of the exhaust traveling through the pipes. Testing has proven that the higher the temperatures of the exhaust stream, the more mono-nitrogen oxides will be eliminated once urea is injected into the pipes.

Further, in order to reduce the energy consumption of motor vehicles, manufacturers of motor vehicles have begum implementing systems to recapture some of the energy vehicles waste as heat, primarily through the exhaust gas. In this regard, it is desirable to retain as much heat in the exhaust gas as possible until the heat is recaptured.

Thus, a need exists for an exhaust connection member having a cover that provides resistance to vibration while still allowing torsional flexibility. A further need exists for an exhaust connection member having improved characterizes of heat resistance, along with vibration resistance and torsional flexibility.

SUMMARY OF THE INVENTION

The present invention involves the provision of an exhaust connection coupler having a flexible conduit portion, a cover made of a generally porous and flexible knitted wire mesh material surrounding the conduit portion and a retainer for combining end parts of the conduit portion and cover. The conduit portion may include a bellows member and/or an interlock member, as well as a torsional joint allowing angular rotation therein. In one embodiment, the cover is formed of a loosely knitted nonwoven, nonbraided material constructed of one or more metallic wire strands. The cover may be constructed from a series of knitted stockinette stitches. The stockinette stitches can formed in a continuous round-and-round manner in a seamless tubular configuration. The cover may be selected from a group of covers designed to be applied to the coupler, the particular cover being chosen for its weight and/or stiffness so as to selectively control the natural frequency of the coupler.

In one embodiment, the cover is applied to the coupler's conduit portion such that when the conduit portion's bellows member and/or interlock member are at a natural uncompressed, unextended length, the cover is generally at a nearly fully extended length. As such, the cover can be adapted to surround the conduit portion so that the cover becomes constricted against the conduit portion when the cover is extended in length longitudinally and wherein such constriction of the cover against the conduit portion limits the amount in which the cover and coupler may be extended in length longitudinally. When the coupler includes a torsional joint, the loosely knitted configuration of the cover permits rotation within the torsional joint. Thus, the cover is designed to provide resistance limiting longitudinal growth of the coupler while enabling compression and angular flexibility. Additionally, the coupler may include a first insulation blanket located between the conduit portion and the cover and a second insulation blanket located between the interlock member and the bellows member. The insulation material is constructed to suppress noise and heat transmission from within the coupler. As such, the insulation material is provided to retain as much heat in the exhaust gas as possible until urea is injected into the exhaust pipes and/or heat from the exhaust gas can be recaptured for purposes of reducing energy consumption.

Additionally, the coupler can include at least one spacer for providing separation between the cover and the conduit portion. In one embodiment, the spacer comprises a woven insulation material surrounding and extending radially outwardly from end portions of a bellows member. In another embodiment, the spacer comprises a flange having a radially outwardly extending shoulder with a diameter greater than a diameter of the bellows member.

Other and further objects of the invention, together with the features of novelty appurtenant thereto, will appear in the course of the following description.

BRIEF DESCRIPTION OF THE SEVERAL VIEWS OF THE DRAWING

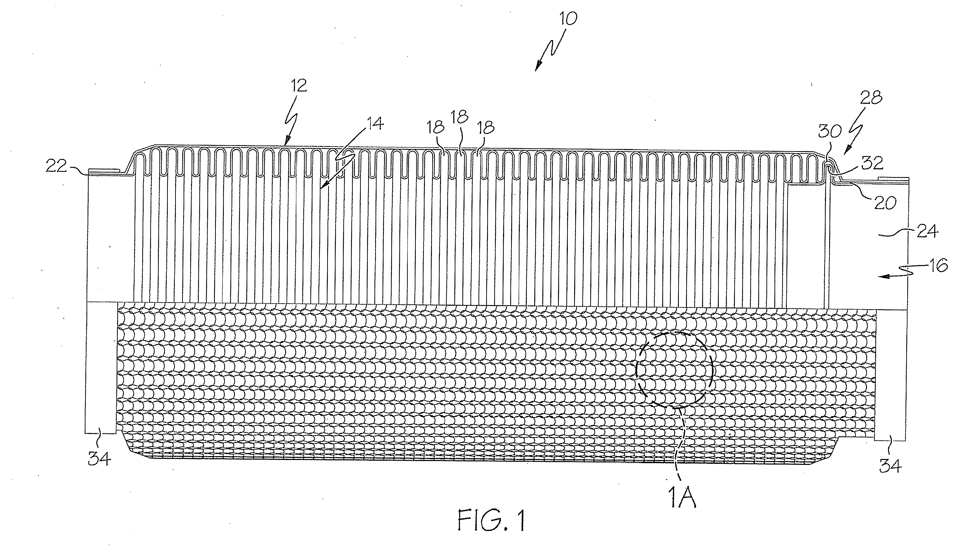

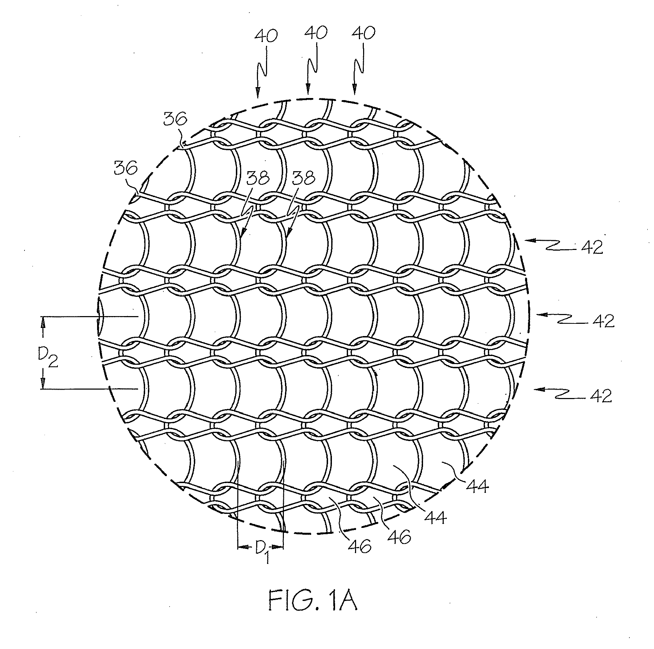

Fig. 1 is a side elevational view of a frequency-controlled exhaust bellows assembly including a bellows member, a torsional joint and a cover (BTM) and having a portion broken away to reveal internal construction in accordance with one embodiment of the present invention;

Fig. 1A is an enlarged schematic view taken generally within Circle A illustrating a cover in accordance with one embodiment of the present invention;

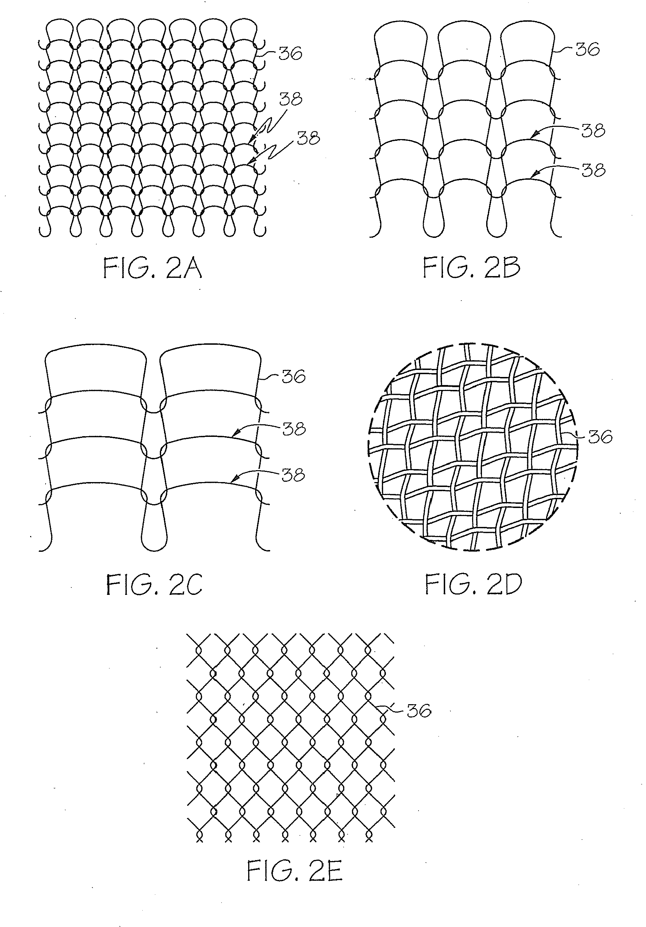

Figs. 2A-2E are schematic views illustrating the construction of the cover in accordance with respective embodiments of the present invention;

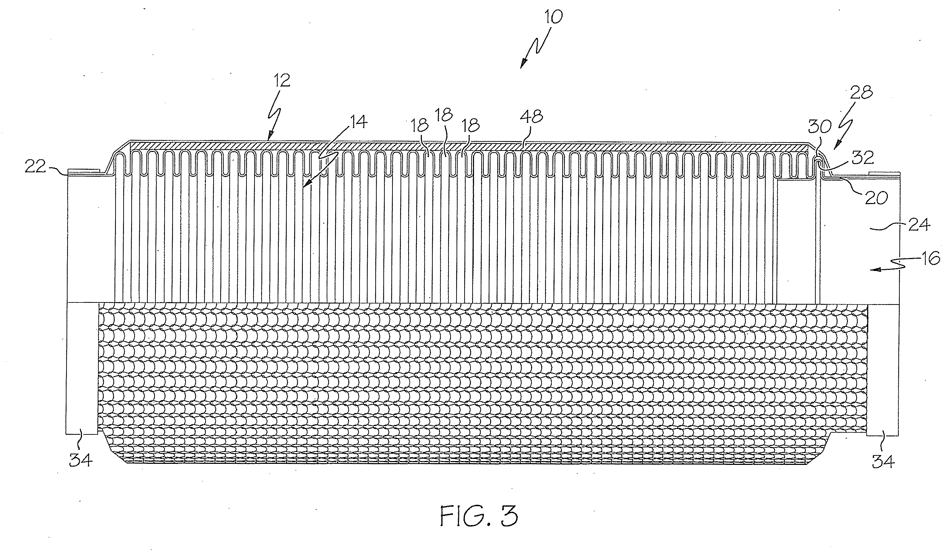

Fig. 3 is a side elevational view of a frequency-controlled exhaust bellows assembly including a bellows member, a torsional joint, insulation and a cover (BTiM) and having a portion broken away to reveal internal construction in accordance with one embodiment of the present invention;

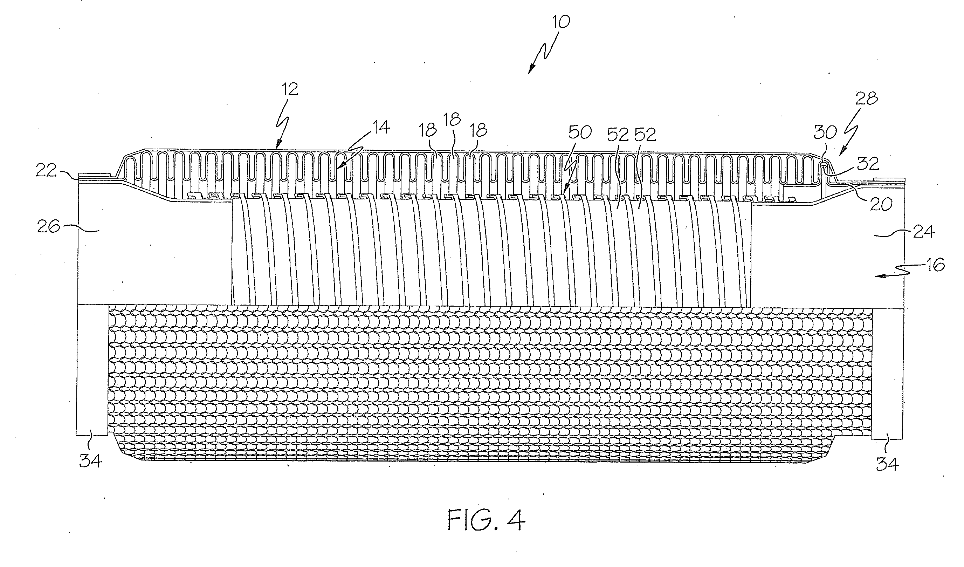

Fig. 4 is a side elevational view of the frequency-controlled exhaust bellows assembly including an interlock flex liner, a bellows member, a torsional joint and a cover (BTLM) and having a portion broken away to reveal internal construction in accordance with one embodiment of the present invention;

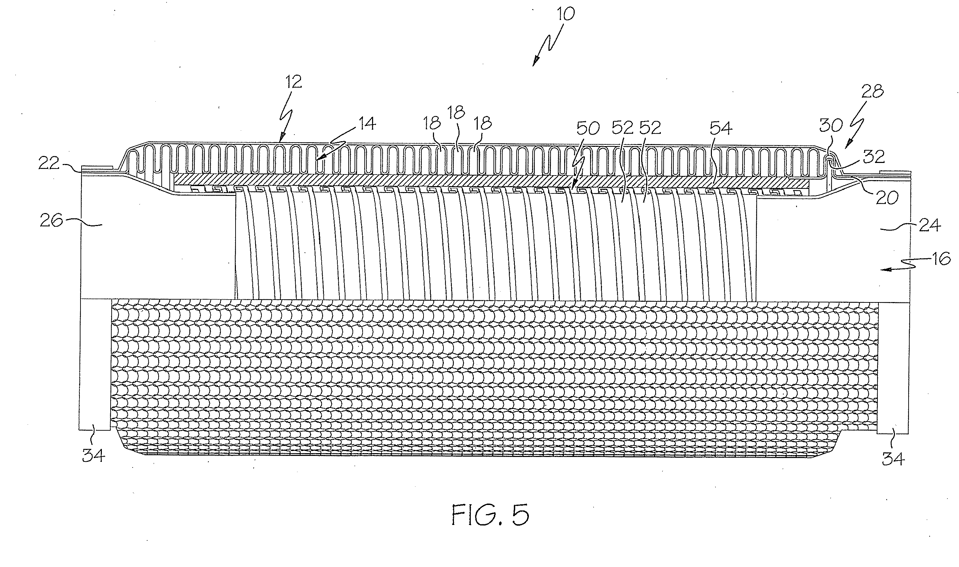

Fig. 5 is a side elevational view of the frequency-controlled exhaust bellows assembly including an interlock flex liner, insulation, a bellows member, a torsional joint and a cover (BTLiM) and having a portion broken away to reveal internal construction in accordance with one embodiment of the present invention;

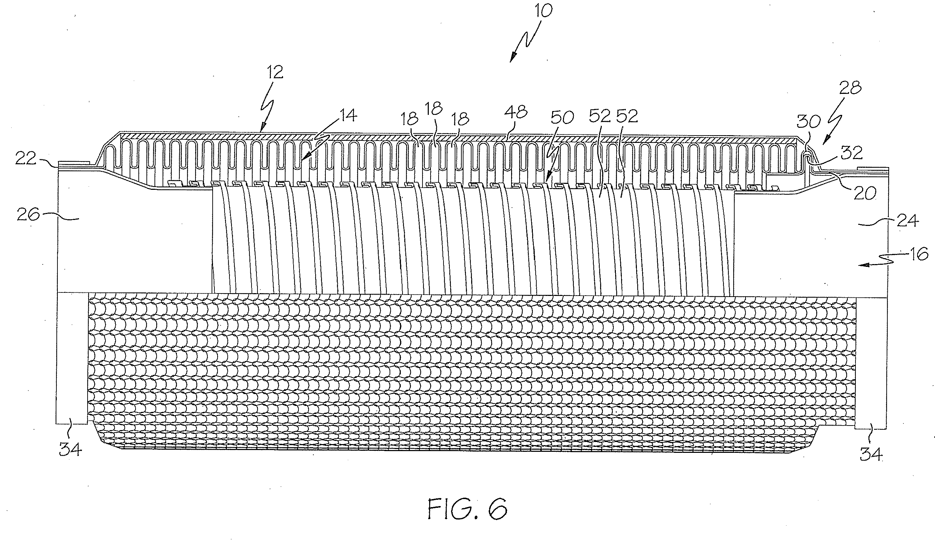

Fig. 6 is a side elevational view of the frequency-controlled exhaust bellows assembly including an interlock flex liner, a bellows member, a torsional joint, insulation and a cover (BTLMi) and having a portion broken away to reveal internal construction in accordance with one embodiment of the present invention;

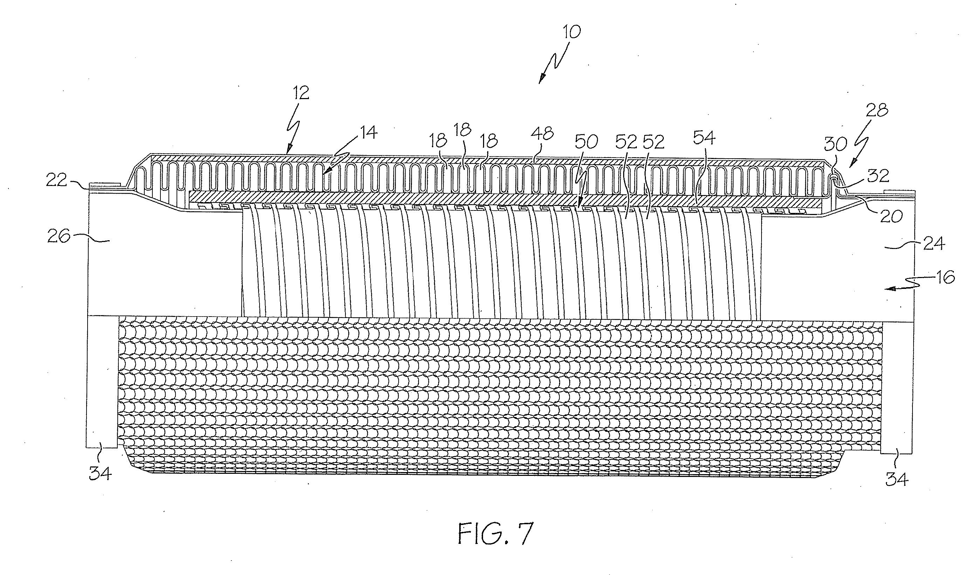

Fig. 7 is a side elevational view of the frequency-controlled exhaust bellows assembly including an interlock flex liner, a first layer of insulation, a bellows member, a torsional joint, a second layer of insulation and a cover (BTLiMi) and having a portion broken away to reveal internal construction in accordance with one embodiment of the present invention;

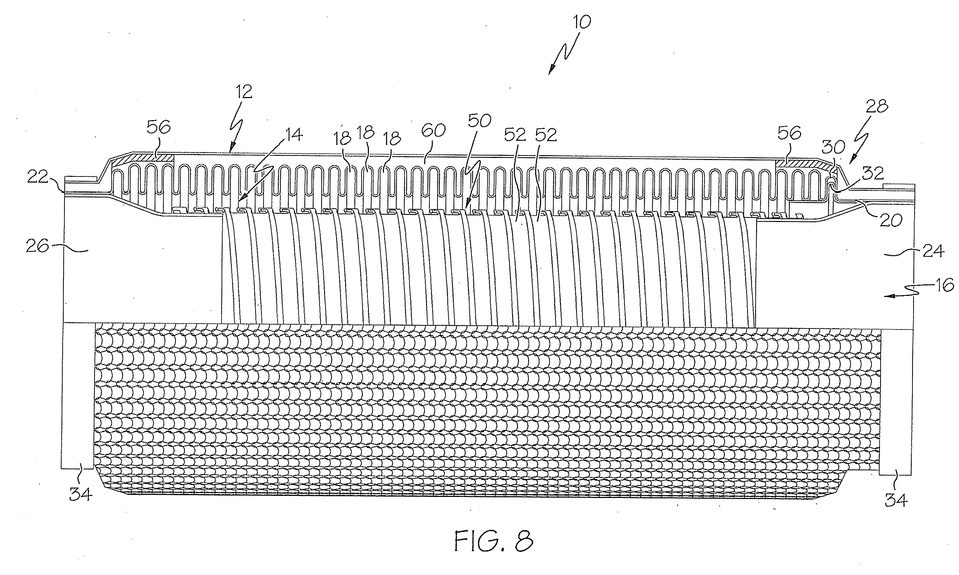

Fig. 8 is a side elevational view of the frequency-controlled exhaust bellows assembly including an interlock flex liner, a bellows member, a torsional joint and a cover (BTLM) and further including strips of material for separating the cover from the bellows and having a portion broken away to reveal internal construction in accordance with one embodiment of the present invention; and

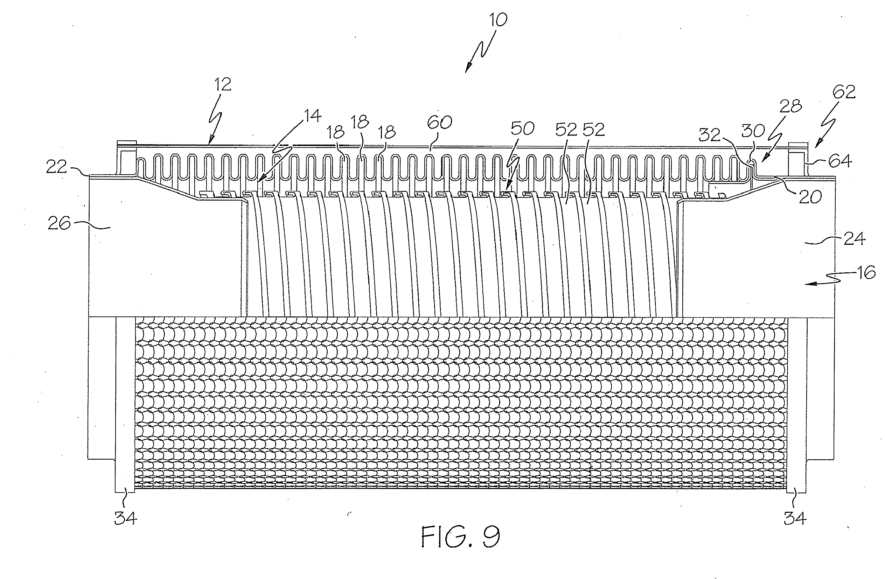

Fig. 9 is a side elevational view of the frequency-controlled exhaust bellows assembly including an interlock flex liner, a bellows member, a torsional joint and a cover (BTLM) and further including a spacer ring at each end for separating the cover from the bellows and having a portion broken away to reveal internal construction in accordance with one embodiment of the present invention.

DESCRIPTION OF THE INVENTION

The invention will now be described with reference to the drawing figures, in which like reference numerals refer to like parts throughout. For purposes of clarity in illustrating the characteristics of the present invention, proportional relationships of the elements have not necessarily been maintained in the drawing figures.

The present invention is directed generally toward a flexible exhaust connection member or coupler 10 that includes, among other components, a loosely knitted wire mesh cover 12. The coupler has a flexible internal conduit having a generally tubular shape and a passageway through which exhaust gasses can flow. As described in further detail below, the conduit may comprise a bellows member 14 and/or an interlock member 50. In one embodiment, the cover 12 is constructed of a series of knitted stockinette stitches formed in a continuous round-and-round manner in a seamless tubular configuration.

As illustrated in Fig. 1, the coupler 10 includes a flexible bellows member 14 having first and second ends 20 and 22 and a cover 12 surrounding the bellows member 14. The coupler 10 may also include a first end flange or fitting 24 coupled with the first end 20 of the bellows member 14 and end rings or collars 34 for securing the cover 12 in place.

The coupler 10 is flexible thereby serving to effectively absorb any linear thermal expansion or contraction of the exhaust piping to which the coupler 10 is connected. The coupler 10 is also suitable for absorbing undesirable vibrations input in the exhaust piping and compensating for misalignments in the exhaust piping.

The bellows member 14, which may be formed of a metallic material and may be of a generally cylindrical shape, is comprised of first and second tube-like ends 20 and 22 with a plurality of repeating corrugations 18 extending therebetween. As shown in Figs. 1 and 3-9, the bellows member 14 includes a torsional joint 28 similar in nature to the one disclosed in U.S. Patent No. 7,066,495 to Thomas, et al. As shown in the figures, the bellows member 14 includes an end corrugation 30. The end corrugation 30 functions as an "outer" corrugation and receives an "inner" corrugation 32 protruding from the first end fitting 24. The corrugated portions 30 and 32 are preferably tightly fit to provide an effective seal therebetween, but yet also facilitate relative rotation between the bellows member 14 and the end fitting 24. Various liners, coatings or lubricants (not shown), including high temperature plastics, metals or other materials, may be provided between the inner and outer corrugations 30 and 32 to facilitate relative movement between the bellows member 14 and the end fitting 24. However, it will be appreciated by one skilled in the art that the bellows member 14 need not include a torsional joint 28. Thus, each of the embodiments shown in Figs. 1 and 3-9 may alternatively be of a non-torsional configuration.

As shown in the figures, the bellows member 14 includes one or more "tapered" bellows or corrugations 30 at each end. These tapered corrugations 30 have an overall diameter that is smaller than the diameter of the rest of the corrugations 18 in order to provide the cover 12 with a transition as its curves over the end of the corrugations. It will further be appreciated that the bellows member 14 may include two, three, four or more successively tapered corrugations at each end. An example of such a tapered configuration is shown in Fig. 4 of U.S. Patent No. 5,769,463 to Thomas. It will be further understood that one or both ends of the bellows member 14 may not include any tapered bellows whatsoever.

Turning now to the cover 12, the cover 12 surrounds an outer periphery of the coupler's 10 conduit portion, which again, may be comprised of a bellows member 14, an interlock member 50 or any other piping or conduit suitable for transmitting exhaust gasses therethrough. The cover 12 can be formed of a wire (or plurality or bundle or wires) that is intertwined, interlaced, looped, knitted, crocheted, woven, braided, or the like. In one embodiment, the cover 12 is formed of a generally porous and flexible knitted wire mesh material. It may be formed of a loosely knitted nonwoven, nonbraided filamentary material, such as metallic wire or a bundle comprising a plurality of wire strands. The cover 12 may be formed from a relatively loose stockinette stitch, knit stitch or purl stitch.

Fig. 1A illustrates that the cover 12 may be of a loosely knitted wire material 36 formed of a plurality of stockinette stitches 38. In accordance with one embodiment of the present invention, the cover 12 may be constructed of stockinette stitches 38 that are formed in a continuous round-and-round manner, resulting in a seamless tubular configuration. This round-and-round knitting results in a plurality of helically wound courses 40 and longitudinally-extending rows 42 of stiches 38. As shown, the courses 40 generally have an average width $D_1$, which may range from about 1/32" or less to 1" or more, depending upon how tight or loose the stitches 38 are created. In one embodiment, the width $D_1$ is between about 1/16" and 1/2" and in another embodiment is between about 1/8" and 1/4" and in yet a further embodiment is about 3/16". As further shown, the rows 42 have an average center-to-center spacing $D_2$, which may range from about 1/32" or less to 1" or more, depending upon how tight or loose the stitches 38 are created. In one embodiment, the width $D_2$ is between about 1/8" and 5/8" and in another embodiment is between about 3/16" and 3/8" and yet a further embodiment is about 5/16". Apertures or void spaces 44 and 46 are defined between the knitted wire 36. Because of the relatively thin nature of the wire 36 (or bundles of wire), the void spaces 44 have dimensions similar to, though slightly smaller than, those described above for $D_1$ and $D_2$.

Alternatively, the cover 12 may be formed of a generally flat body, the ends of which are brought together and attached to form a tubular member that can be sleeved over the conduit portion of the coupler 10. It will be appreciated that the cover 12 can be made of a metallic material such as stainless steel (including 304, 316, 321, 904L and 439) or any other suitable metallic material now known or hereafter develop.

Figs. 2A-2E are partial views depicting examples of how the wire 36 forming the cover 12 may be configured. Figs. 2A-2C illustrate various sizes of stockinette stitches 38 that may be used to create the cover 12, depending upon the weight and stiffness desired. Fig. 2A shows a relatively tighter stitch pattern, while Fig. 2C shows a relatively looser stitch pattern. Fig. 2D demonstrates a weave pattern, while Fig. 2E shows a intertwined looping pattern, such as that typically used to form chain link fence. As series of interlinking loops may also be used, as is typical in the formation of a chainmail material.

One of the primary objectives of the cover 12 is to provide the coupler 10 with resistance to vibration while still allowing torsional flexibility. In providing resistance to vibration, the cover may be designed to effectively (1) dampen the coupler 10 and/or (2) provide the coupler 10 with a desired natural frequency.

One way in which the cover 12 may dampen the coupler 10 is by creating friction between the cover 12 and an adjacent layer. For example, as shown in Figs. 1, 4 and 5, the damping may be a product of the friction between the cover 12 and the bellows member 14, which is disposed immediately inwardly of the cover 12. In other embodiments, such as those shown in Figs. 3, 6 and 7, the damping may be a product of the friction between the cover 12 and an insulation material 48 disposed immediately inwardly of the cover 12. The cover 12 may also provide damping through the internal friction within the cover 12, for example, the friction resulting in the wire filaments 36 and stitches 38 that make up the cover 12.

The cover 12 can also be used to customize the natural frequency of the coupler 10. The natural frequency of the coupler 10 may be customized from product-to-product through the application and design of the cover applied to the assembly. In one case, it may be desirable for the coupler 10 to have a particular natural frequency, while in another case, it may be desirable for the coupler 10 to have a different natural frequency. Similarly, it may be desirable to provide a coupler 10 that has a natural frequency that is outside a particular range of frequencies (e.g., a frequency commonly generated by the engine).

The undamped natural frequency of an object is described by the following:

$$f_n = \frac{1}{2\pi}\sqrt{\frac{k}{m}}$$

$f_n$ =    *natural frequency in hertz (cycles per second)*
$k$ =    *stiffness (N/m)*
$m$ =    *mass (kg)*

As set forth above, the cover 12, which may be attached at both ends of the coupler 10, can be used to control the coupler's 10 natural frequency. In doing so, the cover 12 may be designed to increase the stiffness (k) of the coupler 10 or increase the mass (m) of the coupler 10. The stiffness and mass of the cover 12 can be optimized on a case-by-case basis through (1) the selection of the size of the wire 36 (e.g., gauge or diameter), (2) the selection of the material of which the wire 36 is formed (e.g., stainless steel, other metallic materials, etc.), (3) the pattern in which the wire 36 is intertwined, interlaced, looped, knitted, crocheted, woven, braided, or the like, and (4) the looseness or tightness in which the wire 36 is intertwined, interlaced, looped, knitted, crocheted, woven, braided, or the like. By increasing or decreasing the mass of the coupler 10 or by increasing or decreasing the stiffness of the coupler 10, the cover 12 alone can be used to dictate the coupler's 10 natural frequency. In addition to controlling the stiffness and mass of the coupler 10, the four above-referenced factors are important in dictating the torsional flexibility of the cover 12.

One of the primary advantages of using the cover 12 to dictate the coupler's 10 natural frequency is that multiple different couplers 10 may be manufactured having different natural frequencies with the only difference between the multiple couplers 10 being the cover 12. The remainder of the components (e.g. bellows member 14, etc.) that make up the couplers 10 may be the exact same between the different couplers 10.

For example, a first lot of couplers 10, each having a first natural frequency may be manufactured in a continuous run. Subsequently or simultaneously, a second lot of couplers 10, each having a second natural frequency may be manufactured using the same or similar components as those used in the first lot of couplers 10, the primary difference being that different covers 12 are applied to the first and second groups of couplers 10. Thus, the cover 12 may be selected from a group of covers 12 designed to be applied to the coupler 10 wherein the specific cover 12 is chosen for its weight and/or stiffness so as to selectively control the natural frequency of the coupler 10. Different covers 12 may be applied to different couplers 10 within the same lot or run of assemblies.

Another advantage of the loosely knitted cover 12 illustrated in Fig. 1A is its ability to permit torsional flexibility. The design and construction of the loosely knitted cover 12 contributes to the couplers 10 overall torsional flexibility. The cover 12 is an improvement over the prior art with respect to the way and manner in which it allows the coupler 10 to flex under torsional loading, but yet still act as a cover, particularly in embodiments where it is used to contain insulation 48 around the assembly. The configuration and density in which the wire 36 forming the cover 12 is knitted, examples of which are best illustrated in Figs. 1A and 2A-2C, is a contributing factor its ability to allow torsional flexibility, which is of particular benefit in couplers 10 having torsional joints 28 as described above.

The cover 12 may be connected to the coupler 10 in a variety of manners. As illustrated in the figures, the ends of the cover 12 are contained between the bellows member 14 (or end fittings 24 or 26) and a retainer or outer collar 34 and may be welded thereto. However, the cover 12 may be attached to the ends of the bellows member 14, end fittings 24 and 26 or any other point of the coupler 10 using any suitable attachment methods, including but not limited to a bead of weld, spot welds, a clamp, a compression collar, fasteners (such as rivets, screws, bolts, hooks, clips and the like) or any other methods now known or hereafter developed.

The cover 12 is instrumental in providing resistance or restriction limiting the longitudinal growth of the coupler 10, while allowing for maximum compression and angular flexibility. When attached to both ends of the coupler 10, the cover 12 can be adapted to limit the amount the assembly may compress or extend in its longitudinal direction. This promotes prolonged life of the coupler 10 by restricting it from being stretched too far and potentially breaking or its components (e.g., the interlock member 50) being pulled apart. The loosely knitted construction of the cover 12, however, is such that it allows the coupler 10 to be compressed in length and angularly flex.

As illustrated in the figures, the cover 12 is sleeved over the bellows member 14. When the coupler 10 is extended in length, the circumference of the cover 12 constricts radially and the cover 12 becomes constricted against the bellows member 14 or, as the case may be, the surrounding insulation material 48. The outer diameter of the bellows member 14 (or insulation material 48) prevents the cover 12 from shrinking in diameter any further and thus limits how far the cover 12 (and consequently the coupler 10 and its components, including the bellow member 14 and interlock member 50) may be extended in length. The cover 12 is adapted to control dynamic, axial, lateral, torsional and angular stresses.

The coupler 10 may be constructed such that when the bellows member 14 and/or interlock member 50 are at their natural uncompressed, unextended lengths, the cover 12 is at a nearly fully extended length. The cover 12 surrounds the conduit portion of the coupler 10 such that the cover 12 becomes constricted against the conduit portion when the cover 12 is extended in length longitudinally. Again, such constriction of the cover 12 against the conduit portion limits the amount in which the cover 12 and coupler 10 may be extended longitudinally.

As shown in Figs. 3, 6 and 7, the coupler 10 may include an insulation material 48 located between the bellows member 14 and the cover 12. As shown in Figs. 5 and 7, the coupler 10 may include an insulation material 54 located between the interlock member 50 and the bellows member 14. The insulation material 48 and 54 may either wholly or partially surround the bellows member 14 and interlock member 50, respectively. The insulation material 48 and 54 is constructed so as to suppress heat and noise transmission from within the coupler 10. As such, the insulation material 48 and 54 is in place to retain as much heat in the exhaust gas as possible until urea is injected into the exhaust pipes or heat from the exhaust gas can be recaptured for purposes of reducing energy consumption.

The insulation material 48 and 54 may be constructed of any suitable material that is effective to resist heat transmission. Additionally, insulation material 48 and 54 may be suitable for providing a barrier that dampens vibration and prevents selected portions of the coupler 10 from physically contacting each other. One material that is satisfactory for the insulation material 48 and 54 is commercially available silica or silicone fiber insulation. However, other materials having the necessary characteristics can also be used. In one embodiment, the insulation 48 can have two components: (1) a woven fiber layer and (2) a fibrous material layer. The woven fiber layer can serve to protect the interlock member 50 against wear and serves to prevent the infiltration of the fibers from the insulation through the interlock member 50 and into the exhaust stream. The insulation material 48 and 54 may be comprised of any suitable configuration, including but not limited to (1) only a fibrous material, (2) only a woven material, (3) a fibrous material with a woven material on one side or (4) a fibrous material sandwiched between and having woven materials on both sides.

As illustrated in Figs. 4-9, the coupler 10 can include an interlock member 50 disposed within the bellows member 14. The interlock member 50 is typically formed of a helically wound metal strip 52 as is known in the art. In such embodiments, the coupler 10 also includes a second end fitting 26 adapted for connecting with an adjacent exhaust pipe. It will be appreciated that in one embodiment, the conduit portion of the coupler 10 only includes a interlock member 50 and does not include a bellows member 12. In such a case, the cover 12 will be sleeved around the interlock member 50 and may optionally include an insulation material therebetween.

Additionally, as demonstrated in Figs. 8 and 9, the coupler 10 may include a spacer 56 or 62 for providing separation or space 60 between the cover 12 and the conduit portion. In one embodiment, as shown in Fig. 8, the coupler 10 includes a strip of material 56 placed over the location where the cover 12 curves over the last few outermost corrugations 18 and 30. The strip of material 56 at least partially surrounds the corrugations 18 and 30 and extends radially outwardly therefrom. This strip of material 56 prevents the cover 12 from directly contacting at least those outermost corrugations 18 and 30, which can be of particular benefit on an end of the coupler 10 having a torsional joint 28. The strip of material 56 can act to reduce the friction and wear between the corrugations 18 and 30 and the cover 12 as the torsional joint 28 flexes and rotates. It will be appreciated that a strip of material 56 may be applied to one or both ends of the bellows member 14. In addition to separating the cover 12 from the outermost corrugations 18 and 30 (including any "tapered" corrugations), the strip(s) of material 56 may also cause the cover 12 to standoff of and be separated from some or all of the remaining corrugations 18, depending on factors such as the thickness of the material 56 and the tightness of the cover 12, among others. The strip of material 56 may be formed of a low friction material capable of withstanding the relatively high temperatures created by the exhaust gas. As such, the material 56 may be formed of Teflon®, an insulation material as further described above, or any other suitable material now known or hereafter developed.

As depicted in Fig. 9, the coupler 10 includes a spacer ring or flange 62 at each end for separating the cover 12 from the conduit portion. Such spacer flanges 62 can be of particular benefit on an end of the coupler 10 having a torsional joint 28. The spacer flanges 62 act to reduce the friction and wear between the corrugations 18 and 30 and the cover 12 as the torsional joint 28 flexes and rotates. As shown, the spacer flanges 62 include a radially outwardly extending shoulder 64 having a diameter greater than the diameter of the conduit portion. It will be understood that a spacer flange 62 may be applied to one or both ends of the conduit portion.

As demonstrated in the figures, the coupler 10 may be formed in a number of configurations. As discussed herein, in addition to the cover 12 (denoted hereunder as "M"), the coupler 10 may include other components such as an interlock flex liner 50 (denoted hereunder as "L"), a bellows member 14 (denoted hereunder as "B"), a torsional joint 28 (denoted hereunder as "T") and one or more layers of insulation 48 and 54 (denoted hereunder as "i"). The figures illustrate some, but not all, of the coupler's possible configurations. Such configurations include, but are not limited to, the following: BTM, BTiM, BTMi, BTLM, BTLiM, BTLMi, BTLiMi, BM, BiM, BMi, BLM, BLiM, BLMi and BLiMi. It will be appreciated by one skilled in the art that the aforementioned configurations are simply examples and that the coupler 10 may take on any conceivable configuration including a combination of one more of the components (B, L, M and i) listed above. It will further be appreciated that the coupler 10 may include multiple layers of mesh or cover (M) and that those layers may be located one directly on top of the other or may have other components (e.g., insulation material 48 and 54) located therebetween.

The entire disclosures, including the specifications, drawings and photographs, of U.S. Provisional Patent Application Serial No. 61/507,508 filed July 13, 2011 to Clark Thomas and Scott R. Swank entitled "Frequency Controlled Exhaust Bellows Assembly," U.S. Patent Application Serial No. 12/942,684 filed November 9, 2010 to Stalcup et al. entitled "Exhaust Connection Member With Preformed Braided Cover" and U.S. Patent Application Serial No. 12/942,828, filed November 9, 2010 to Stalcup et al. entitled "Compressible Exhaust Connection Member" are incorporated herein by reference.

From the foregoing it will be seen that this invention is one well adapted to attain all ends and objects hereinabove set forth together with the other advantages which are obvious and which are inherent to the structure.

It will be understood that certain features and subcombinations are of utility and may be employed without reference to other features and subcombinations. This is contemplated by and is within the scope of the claims.

Since many possible embodiments may be made of the invention without departing from the scope thereof, it is to be understood that all matter having set forth or shown in the accompanying drawings is to be interpreted as illustrative, and not in a limiting sense. In particular, it is envisaged that the invention may also encompass a coupler suitable for connecting pipes in an exhaust system, said coupler comprising:

a bellows member having a plurality of corrugation and first and second ends;
a cover surrounding an outer periphery of said bellows member, said cover being constructed of a loosely knitted metallic wire mesh formed a plurality of stockinette stitches in a continuous round-and-round manner in a seamless tubular configuration; and
a retainer for combing end parts of said bellows member and said cover.

It may also comprise a coupler suitable for connecting pipes in an exhaust system, said coupler comprising:

a flexible conduit portion having a generally tubular shape and a passageway through which exhaust gasses can flow, said conduit portion having first and second ends; a cover surrounding an outer periphery of said conduit portion; and
a spacer for providing separation between said cover and said conduit portion.

It may also comprise the coupler, wherein said spacer comprise a material surrounding and extending radially outwardly from end portions of said conduit portion.
It may also comprise the coupler, wherein said material is a woven insulation material.
It may also comprise the coupler, wherein said spacer comprises a flange having a radially outwardly extending shoulder with a diameter greater than a diameter of said conduit portion.

## Claims

1. A coupler suitable for connecting pipes in an exhaust system, said coupler comprising:

a flexible internal conduit portion having a generally tubular shape and a passageway through which exhaust gasses can flow, said conduit portion having first and second ends;
a cover surrounding an outer periphery of said conduit portion, said cover being formed of a generally porous and flexible knitted wire mesh material; and
a retainer for combining end parts of said conduit portion and said cover.

2. The coupler of claim 1, wherein said conduit portion includes a bellows member having a plurality of corrugations.

3. The coupler of claim 2, wherein said conduit portion further includes an interlock member disposed within said bellows member, said interlock member formed of a helically wound metal strip.

4. The coupler of any of claims 2 or 3, wherein when said bellows member is at a natural uncompressed, unextended length, said cover is generally at a nearly fully extended length.

**5.** The coupler of any of claims 3 or 4 further comprising an insulation material located between said interlock member and said bellows member, said insulation being constructed to suppress noise and heat transmission from within said coupler.

**6.** The coupler of any of the previous claims, further comprising an insulation material located between said conduit portion and said cover, said insulation material being constructed to suppress noise and heat transmission from within said coupler.

**7.** The coupler of any of the previous claims, wherein said cover surrounds said conduit portion such that said cover becomes constricted against said conduit portion when said cover is extended in length longitudinally and wherein such constriction of said cover against said portion limits the amount in which said cover and coupler may be extended in length longitudinally.

**8.** The coupler of any of the previous claims, wherein said cover is formed of a loosely knitted nonwoven, nonbraided material.

**9.** The coupler of any of claims 1 to 7, wherein said cover is formed from a series of knitted stockinette stitches.

**10.** The coupler of claim 9, wherein said stitches are formed in a continuous round-and-round manner in a seamless tubular configuration.

**11.** The coupler of any of claims 1 to 7, wherein said cover is formed from one or more metallic wire strands.

**12.** The coupler of any of the previous claims, further comprising a torsional joint wherein said cover is configured so as to permit rotation within said torsional joint.

**13.** The coupler of any of the previous claims, wherein said conduit portion has a body portion between said first and second ends thereof and a fitting coupled with said first end in a manner to allow rotation of said body portion relative to said fitting.

**14.** The coupler of any of the previous claims, wherein said cover is designed to provide resistance limiting longitudinal growth of said coupler while enabling compression and angular flexibility.

**15.** The coupler of any of the previous claims, wherein said cover is selected from a group of covers designed to be applied to the coupler, said cover being chosen for its weight or stiffness so as to selectively control the natural frequency of the coupler.

FIG.1

FIG.1A

FIG. 2A

FIG. 2B

FIG. 2C

FIG. 2D

FIG. 2E

FIG. 3

EP 2 450 546 A1

FIG. 4

EP 2 450 546 A1

FIG.5

EP 2 450 546 A1

FIG. 6

FIG. 7

FIG. 8

FIG. 9

Europäisches
Patentamt

European
Patent Office

Office européen
des brevets

# EUROPEAN SEARCH REPORT

Application Number

EP 11 18 8508

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 974 741 A1 (SJM COMPANY LIMITED [KR]) 26 January 2000 (2000-01-26) * paragraphs [0031] - [0038]; figure 3 * ----- | 1-7, 11-15 | INV. F01N13/18 F16L27/11 |
| X | DE 20 2010 006231 U1 (BOA BALG UND KOMPENSATOREN TEC [DE]) 5 August 2010 (2010-08-05) * paragraphs [0023], [0024]; figures 1,2 * ----- | 1-15 | |
| X | DE 20 2006 011404 U1 (WITZENMANN GMBH [DE]) 28 September 2006 (2006-09-28) * paragraph [0015]; figure 1 * ----- | 1-4,7-15 | |
| X | EP 0 282 689 A2 (WITZENMANN METALLSCHLAUCHFAB [DE]) 21 September 1988 (1988-09-21) * column 5, lines 45-58; figures * ----- | 1-5,7, 11-15 | |
| X | EP 1 010 872 A2 (VOLKSWAGEN AG [DE]) 21 June 2000 (2000-06-21) * paragraphs [0020], [0030]; figure 1 * ----- | 1-4,7, 11-15 | TECHNICAL FIELDS SEARCHED (IPC) F01N F16L |

The present search report has been drawn up for all claims

| Place of search | Date of completion of the search | Examiner |
|---|---|---|
| Munich | 27 February 2012 | Blanc, Sébastien |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

 ..........................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 11 18 8508

This annex lists the patent family members relating to the patent documents cited in the above-mentioned European search report.
The members are as contained in the European Patent Office EDP file on
The European Patent Office is in no way liable for these particulars which are merely given for the purpose of information.

27-02-2012

| Patent document cited in search report | | Publication date | Patent family member(s) | | Publication date |
|---|---|---|---|---|---|
| EP 0974741 | A1 | 26-01-2000 | EP 0974741 A1 | | 26-01-2000 |
| | | | KR 20000008987 A | | 15-02-2000 |
| DE 202010006231 | U1 | 05-08-2010 | DE 102011016923 A1 | | 03-11-2011 |
| | | | DE 202010006231 U1 | | 05-08-2010 |
| | | | WO 2011134633 A1 | | 03-11-2011 |
| DE 202006011404 | U1 | 28-09-2006 | DE 202006011404 U1 | | 28-09-2006 |
| | | | EP 1884633 A2 | | 06-02-2008 |
| EP 0282689 | A2 | 21-09-1988 | DE 3708415 A1 | | 22-09-1988 |
| | | | EP 0282689 A2 | | 21-09-1988 |
| | | | ES 2030448 T3 | | 01-11-1992 |
| EP 1010872 | A2 | 21-06-2000 | DE 19858634 A1 | | 21-06-2000 |
| | | | EP 1010872 A2 | | 21-06-2000 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5769463 A, Thomas
- US 6230748 B, Krawietz
- US 7066495 B, Thomas

- US 61507508 A, Clark Thomas and Scott R. Swank
- US 94268410 A, Stalcup
- US 94282810 A, Stalcup